# EUROPEAN PATENT APPLICATION

(11) **EP 4 741 227 A1**
(43) Date of publication of application: **13.05.2026**
(21) Application number: 24836007.5
(22) Date of filing: 01.07.2024
(51) Int. Cl.: B60Q 1/34, B60Q 1/26, F21S 41/43, F21S 41/143, F21S 41/255, F21S 41/265, F21W 102/17, F21W 103/20, F21Y 115/10

(54) **PROJECTION DEVICE**

(30) Priority: 05.07.2023 JP 2023110375
(71) Applicant: Koito Manufacturing Co., Ltd., Shinagawa-ku, Tokyo 141-0001 (JP)
(72) Inventor: TANI, Kentaro, Shizuoka-shi, Shizuoka 424-8764 (JP)
(74) Representative: Stöckeler, Ferdinand
(86) International application number: PCT/JP2024/023714
(87) International publication number: WO 2025/009494

(57) **Abstract**

Provided is a projection device that prevents glare of light emitted from an auxiliary lamp of a vehicle and suppresses a decrease in brightness of a light pattern projected onto a road surface. A projection device (1) mounted on a vehicle to project a light pattern onto a surrounding road surface includes a far distance side projection unit (2, 3) that projects a predetermined far distance side light pattern onto a relatively far position, and a near distance side projection unit (4) that projects a predetermined near distance side light pattern onto a relatively near position. The far distance side projection unit (2, 3) projects, as a light pattern (FOP, COP), the surface shape of a light emitting surface of an LED (12, 13) by a projection lens (22, 23). The near distance side projection unit (4) projects, as a light pattern (NOP), the opening shape of a shade opening (34) opened in a shade (30) that blocks light emitted from an LED (14), by a projection lens (24).

## Description

### TECHNICAL FIELD

The present invention relates to a projection device mounted on a vehicle and suitable for projecting and drawing a required light pattern on a road surface of a road.

### BACKGROUND ART

In recent years, for the purpose of achieving traffic safety during traveling of an automobile, there has been proposed a technique of projecting a light pattern onto a road surface around the automobile to enhance an ability to call attention to other vehicles and pedestrians. As a projection device that projects such a light pattern, for example, Patent Literature 1 proposes a technique in which a shade opening having a required shape is disposed on the front side of a light emitting element as a light source and a light pattern formed by the shade opening is projected by a projection lens. Patent Literature 1 also proposes a technique of projecting a plurality of light patterns by one projection device by disposing a plurality of light sources and a plurality of shade openings.

### CITATION LIST

### PATENT LITERATURE

Patent Literature 1: JP-A-2023-028932

### SUMMARY OF INVENTION

### PROBLEMS TO BE SOLVED BY INVENTION

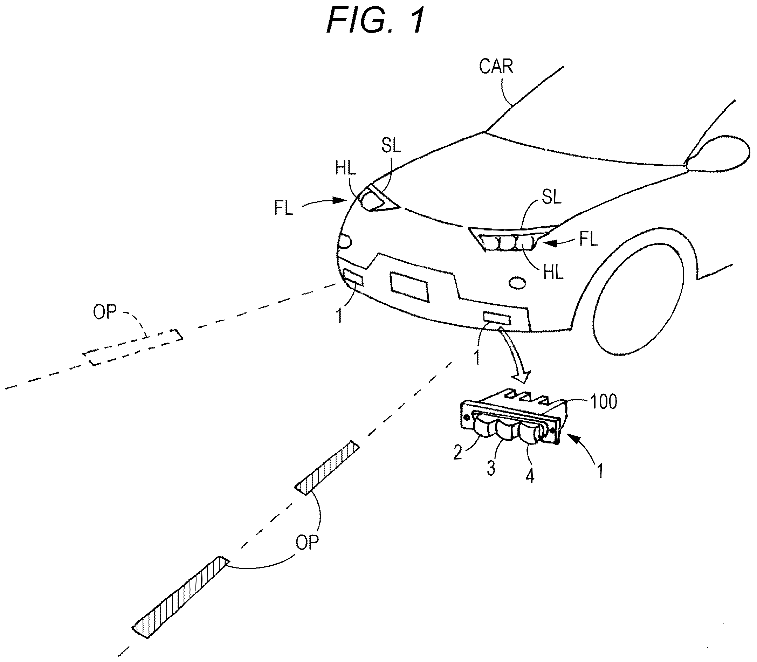

As shown in a projection device 1 of Fig. 1 as an example, the projection device of this type is often disposed at a position below a front lamp FL of an automobile CAR. In this example, the projection device 1 is disposed at a position near a front bumper of the automobile CAR, and is configured to project a light pattern OP onto a road surface in front of the automobile. By projecting the light pattern OP indicating the traveling direction onto the road surface in front of the automobile CAR, the traveling direction of the automobile is notified to other vehicles, pedestrians, and the like present ahead of or in front of the automobile CAR, which contributes to traffic safety. For example, when a turn signal lamp (auxiliary lamp SL) forming part of a front lamp FL is turned on (blinks), the light pattern OP is projected in synchronization with the turn signal lamp, so that the traveling direction of the automobile can be displayed by light irradiation from the turn signal lamp and the light pattern OP from the projection device 1 and the traffic safety can be enhanced.

In a case where the light pattern is projected in synchronization with the lamp in this manner, part of the light emitted from the projection device enters the light irradiation area of the lamp, and this incident light may adversely affect normal light irradiation of the lamp as glare light. Although details will be described later, in the example of Fig. 1, part of the light directed upward among the light projected from the projection device 1 enters, as glare light LG, the light irradiation region of the turn signal lamp SL disposed on the upper side.

In order to prevent this glare light, it is conceivable to dispose a light blocking means, such as a hood or a shade, for blocking light not contributing to projection of the light pattern (non-pattern light), particularly light directed to the upper side on which the front lamp FL is disposed, among the light projected from the projection lens, in the projection device. Alternatively, it is also conceivable to reduce upward light among the projection light by making the shape of the projection lens unique, reducing the area of the lens surface of the projection lens, or the like. However, in any case, since part of the projection light is blocked, the amount of light of the projected light pattern is reduced, which causes a decrease in brightness of the light pattern.

An object of the present invention is to provide a projection device that prevents glare of light emitted from a lamp and suppresses a decrease in brightness of a projected light pattern.

### SOLUTION TO PROBLEMS

A projection device of the present invention is a projection device mounted on a vehicle to project a light pattern onto a surrounding road surface. The projection device includes a far distance side projection unit that projects a predetermined far distance side light pattern onto a relatively far position, and a near distance side projection unit that projects a predetermined near distance side light pattern onto a relatively near position. Further, the far distance side projection unit is a projection unit that projects, as a light pattern, the surface shape of a light emitting surface of a light source, and the near distance side projection unit is a projection unit that projects, as a light pattern, the opening shape of a shade opening opened in a shade that blocks light emitted from a light source.

In the present invention, for example, the far distance side projection unit includes a light source having a light emitting surface in a required shape, and a projection lens that projects light emitted from the light emitting surface, the light emitting surface is disposed on the focal plane of the projection lens, and the projection lens projects, as a light pattern, the surface shape of the light emitting surface. The far distance side projection unit preferably includes a shade that blocks non-pattern light not contributing to a light pattern to be projected.

In the present invention, for example, the near distance side projection unit includes a light source that emits light, a primary lens that condenses the light from the light source, a shade having a shade opening through which the light condensed by the primary lens is transmitted, and a projection lens that projects the light having transmitted through the shade opening, and the projection lens projects, as a light pattern, the opening shape of the shade opening.

### EFFECTS OF INVENTION

According to the present invention, since the far distance side projection unit is the projection unit that projects, as the light pattern, the surface shape of the light emitting surface of the light source, it is possible to prevent a decrease in brightness of the projected light pattern even when the non-pattern light is blocked by the shade or the like in order to prevent the glare light. Moreover, since the near distance side projection unit causing less glare light is the projection unit that projects, as the light pattern, the opening shape of the shade opening opened in the shade that blocks the light emitted from the light source, the bright and sharp light pattern can be projected.

### BRIEF DESCRIPTION OF DRAWINGS

Fig. 1 is a schematic partial perspective view of an automobile equipped with a projection device of an embodiment.
Fig. 2(a) is a schematic plan view for describing the features of the projection device, and Fig. 2(b) is a schematic side view thereof.
Fig. 3 is a schematic perspective view of the projection device of the embodiment.
Fig. 4 is a partially exploded perspective view of a main portion of the projection device of the embodiment.
Fig. 5 is a schematic plan view of the projection device of the embodiment.
Fig. 6(a) is a schematic side view for describing the features of the projection device of the embodiment including a far projection lens, Fig. 6(b) is a schematic side view for describing the features of the projection device of the embodiment including a center projection lens, and Fig. 6(c) is a schematic side view for describing the features of the projection device of the embodiment including a near projection lens.
Fig. 7(a) is a schematic perspective view for describing the features of the projection device of the embodiment including the far projection lens or the center projection lens, and Fig. 7(b) is a schematic perspective view for describing the features of the projection device of the embodiment including the near projection lens.

### DESCRIPTION OF EMBODIMENTS

Next, an embodiment of the present invention will be described with reference to the drawings. In this embodiment, as shown in Fig. 1, a projection device 1 is disposed at a position below a front lamp FL disposed in a front portion of a vehicle body of an automobile CAR. Although only the front portion of the automobile CAR is shown in Fig. 1, the front lamp FL includes front lamps FL disposed on the left and right sides of the automobile CAR, and accordingly, the projection device 1 includes projection devices 1 disposed on the left and right sides of the automobile CAR. The front lamp FL is configured as a composite lamp in which a head lamp HL and an auxiliary lamp SL which is also used as a clearance lamp and a turn signal lamp are integrated.

The left and right projection devices 1 are configured to project required light patterns in synchronization with lighting of the front lamps FL on the same left and right sides of the automobile CAR. Here, when any of the left and right auxiliary lamps SL is turned on as the turn signal lamp in a blinking state, the projection device 1 on the side corresponding to such an auxiliary lamp SL is configured to project, in synchronization therewith, an elongated rectangular light pattern OP along the front-rear direction of the automobile on a road surface in front of the automobile CAR.

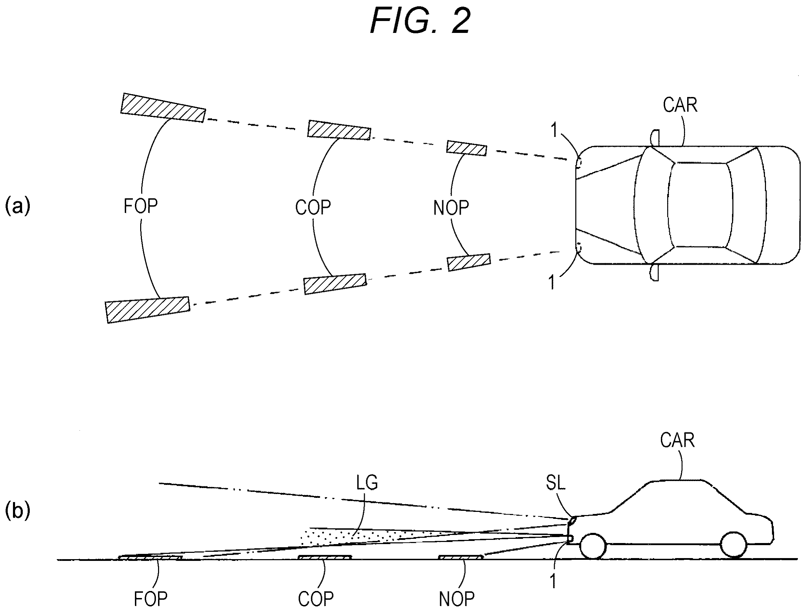

That is, as shown in a schematic plan view of Fig. 2(a) and a schematic side view of Fig. 2(b), each of the left and right projection devices 1 is configured to project the light pattern OP having a rectangular or band shape along a virtual straight line (broken line) extending obliquely outward and forward to some extent in a vehicle width direction with respect to the forward direction of the automobile CAR. In this example, each of the left and right projection devices 1 projects a near light pattern NOP, a center light pattern COP, and a far light pattern FOP as light patterns at a near position immediately before the automobile CAR, a center position slightly farther than the near position, and a far position farthest from the automobile CAR along the virtual straight line. The distances from the automobile CAR to the near light pattern NOP, the center light pattern COP, and the far light pattern FOP are appropriately set, and for example, the distance to the far light pattern FOP is about 4 m.

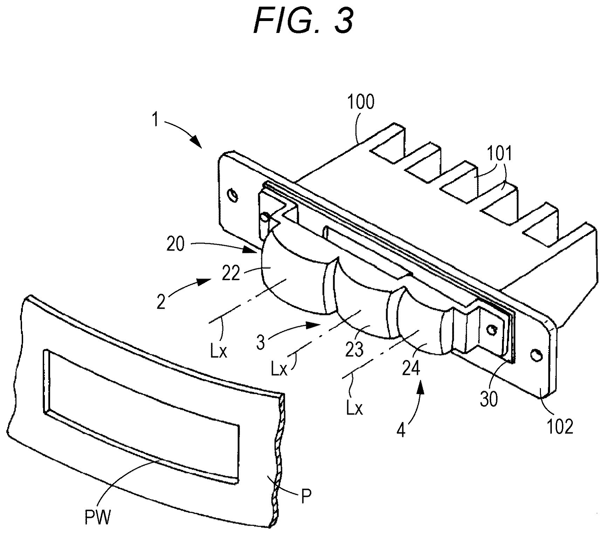

Fig. 3 is a perspective view showing a schematic configuration of the projection device 1 according to the embodiment, and shows the left projection device 1 disposed in a left front portion of the vehicle body of the automobile CAR shown in Fig. 1. The right projection device 1 (not shown) has a configuration symmetrical to the left projection device 1 in the left-right direction. The projection device 1 shown in Fig. 3 includes a horizontally-long housing 100 having a heat dissipation fin 101 on the rear side to also serve as a heat sink and opened on the front side. Three projection units 2, 3, 4 described later are integrally incorporated into the housing 100 and arranged in the vehicle width direction in the housing 100.

As shown in Fig. 3, in the projection device 1, a projection lens 20 is attached to the front surface of the housing 100 with screws or the like, and this projection lens 20 is fixed to the front portion of the vehicle body of the automobile CAR with bolts or the like at front flanges 102 of the housing 100 on both sides thereof. When fixed, the projection lens 20 is exposed to the front side of the automobile CAR through an opening window PW opened in a vehicle front panel P, and the light pattern OP can be projected using light emitted from the projection lens 20.

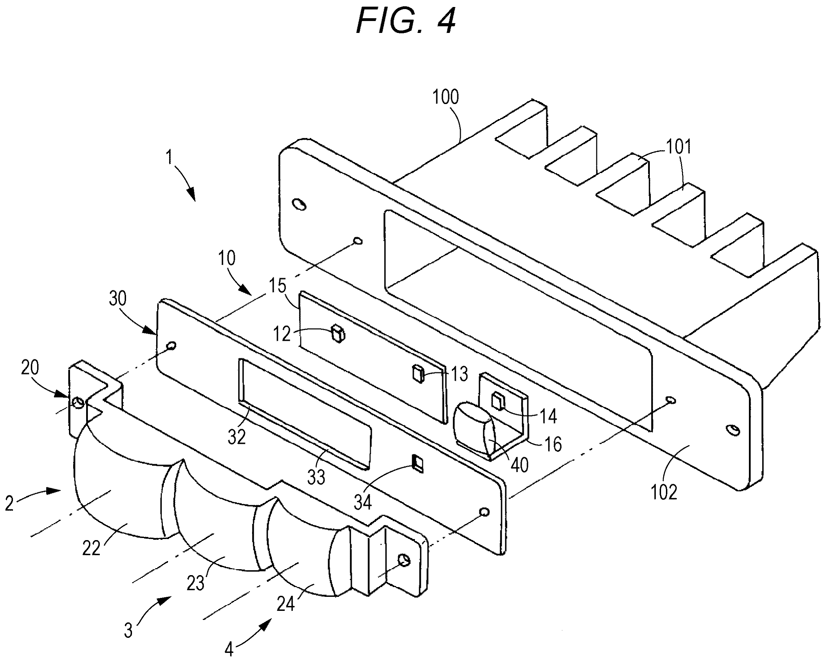

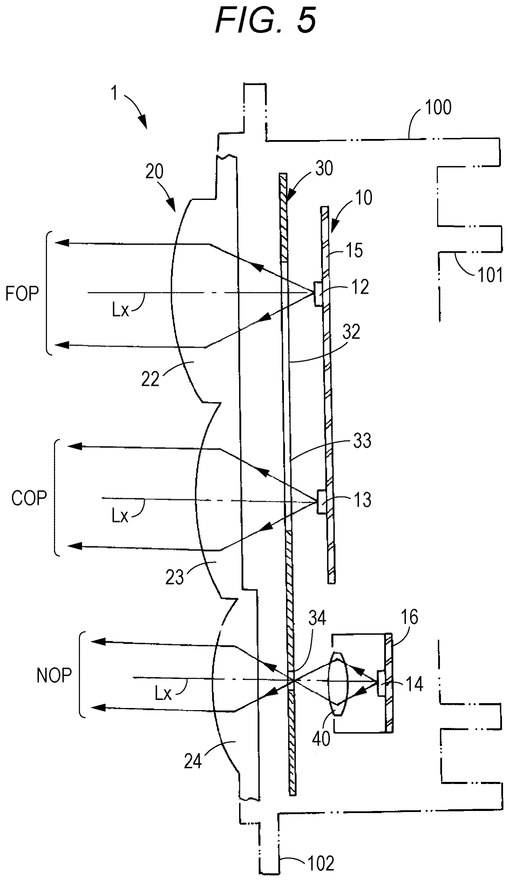

Fig. 4 is a partially exploded perspective view of a main portion of the projection device 1, and Fig. 5 is a schematic plan view of each of the projection units 2, 3, 4 incorporated into the housing 100. Note that in these figures, illustration and description of a detailed configuration of the housing 100 and a specific support structure of the projection units 2, 3, 4 disposed in the housing 100 are omitted.

The three projection units 2, 3, 4 are arranged in the vehicle width direction in the housing 100, and are configured as a far projection unit 2 disposed inside in the vehicle width direction (in this example, the left side of Fig. 4 and the upper side of Fig. 5) to project the far light pattern FOP, a center projection unit 3 disposed closer to the outside in the vehicle width direction than the far projection unit 2 to project the center light pattern COP, and a near projection unit 4 disposed on the outermost side in the vehicle width direction to project the near light pattern NOP. In these projection units 2, 3, 4, the far projection unit 2 and the center projection unit 3 are configured as a far distance side projection unit in the present invention, and the near projection unit 4 is configured as a near distance side projection unit in the present invention. Although details will be described later, each of the projection units 2, 3, 4 includes a light source 10, the projection lens 20, and a shade 30, and the near projection unit 4 further includes a primary lens 40.

The far projection unit 2 includes a far light source 12 that emits light to the light source 10. Further, the far projection unit 2 includes, as the projection lens 20, a far projection lens 22 that projects, as the light pattern, the light emitted from the light source 12 onto the road surface. In addition, the shade 30 is disposed between the light source 12 and the projection lens 22, and the shade 30 is provided with a far shade opening 32 through which light contributing to formation of the light pattern among the light emitted from the light source 12 is transmitted.

The center projection unit 3 has substantially the same configuration as that of the far projection unit 2, and includes a center light source 13 that emits light to the light source 10. Further, the center projection unit 3 includes, as the projection lens 20, a center projection lens 23 that projects, as the light pattern, the light emitted from the light source 13 onto the road surface. In addition, the shade 30 is disposed between the light source 13 and the projection lens 23, and the shade 30 is provided with a center shade opening 33 through which light contributing to formation of the light pattern among the light emitted from the light source 13 is transmitted.

The near projection unit 4 includes a near light source 14 that emits light to the light source 10, and as the projection lens 20, a near projection lens 24 that projects, as the light pattern, the light emitted from the near light source 13 onto the road surface. Further, the near projection unit 4 includes the primary lens 40 that condenses the light emitted from the near light source 14 between the near light source 14 and the near projection lens 24. The shade 30 is further disposed between the primary lens 40 and the near projection lens 24, and the shade 30 is provided with a near shade opening 34 that forms a pseudo light source of the light pattern with the light condensed by the primary lens 40.

In the far projection unit 2 and the center projection unit 3, each of the far light source 12 and the center light source 13 includes one light emitting element, and here, each light emitting element includes a light emitting diode (LED) that emits light in a required color, for example, amber light. Hereinafter, the light sources 12, 13 will be each referred to as LEDs 12, 13, or a far LED 12 and a center LED 13. Each of the LEDs 12,13 has a rectangular light emitting surface, and is mounted on a common light source substrate 15 on which a required electric circuit is formed in a state of the light emitting surface facing forward. Although not shown, each of the LEDs 12,13 is electrically connected to a lighting controller via the electric circuit formed on the light source substrate 15, and emits light when the auxiliary lamp SL is turned on as the turn signal lamp.

In the near projection unit 4, the light source 14 includes an LED that emits amber light. Hereinafter, this light source 14 will be referred to as an LED 14 or a near LED 14. The near LED 14 has a rectangular light emitting surface, and is mounted on a light source substrate 16 separate from the light source substrate 15 in a state of the light emitting surface facing forward. The near LED 14 is electrically connected to the lighting controller via an electric circuit formed on the light source substrate 16, and emits light when the auxiliary lamp SL is turned on as the turn signal lamp.

The projection lenses 22, 23, 24 of the far, center, and near projection units 2, 3, 4 are configured as one projection lens 20. For example, the projection lens 20 is formed of an integrally-molded light transmissive member of transparent resin or the like, and is formed such that the far projection lens 22, the center projection lens 23, and the near projection lens 24 are horizontally arranged in this order from the inside to the outside in the vehicle width direction and are retracted in a stepwise manner toward the rear along an optical axis Lx. Each of the projection lenses 22, 23, 24 is a spherical or aspherical plano-convex lens, but may be a biconvex lens or a meniscus convex lens. In addition, each of the projection lenses 22, 23, 24 is formed as a substantially rectangular lens formed by cutting off four sides of a circular lens in an arc shape.

In the far, center, and near projection units 2, 3, 4, the shade openings 32, 33, 34 are formed in one shade 30. For example, the shade 30 is formed of one non-translucent horizontally-long plate-shaped member, and the far shade opening 32, the center shade opening 33, and the near shade opening 34 are provided corresponding to the projection units 2, 3, 4. The far shade opening 32 and the center shade opening 33 are formed as one horizontally-long rectangular opening, but may be individual openings. The near shade opening 34 is formed as one square or rectangular opening, that is, an opening having a shape corresponding to the light pattern to be projected.

The far shade opening 32 and the center shade opening 33 are provided to allow only the light contributing to projection of the light pattern among the light emitted from the far LED 12 and the center LED 13 to transmit therethrough and block non-pattern light not contributing to projection. That is, among the light emitted from the light emitting surfaces of the LEDs 12, 13, light which is not incident on the projection lenses 22, 23 or light which is incident on peripheral portions of the projection lenses 22, 23, in particular, light which has deviated to above the projection lenses 22, 23 or light which is incident on an upper side portion is blocked.

Further, the near projection unit 4 includes the primary lens 40 that temporarily condenses the light emitted from the near LED 14 to a position near the near shade opening 34, and the primary lens 40 is supported by a front end portion of the light source substrate 16. The primary lens 40 forms an image on the light emitting surface of the near LED 14 at the position of the near shade opening 34, thereby forming the pseudo light source for emitting light having a rectangular light flux shape (beam shape) based on the opening shape of the near shade opening 34.

The light source 10 and primary lens 40 of the projection units 2, 3, 4 are incorporated into the housing 100. In addition, the common projection lens 20 and shade 30 provided integrally with the projection units 2, 3, 4 are fixed together to an opening flange 102 at the front surface of the housing 100 with fixing means such as a screw, whereby the projection device 1 having the external configuration shown in Fig. 3 is formed.

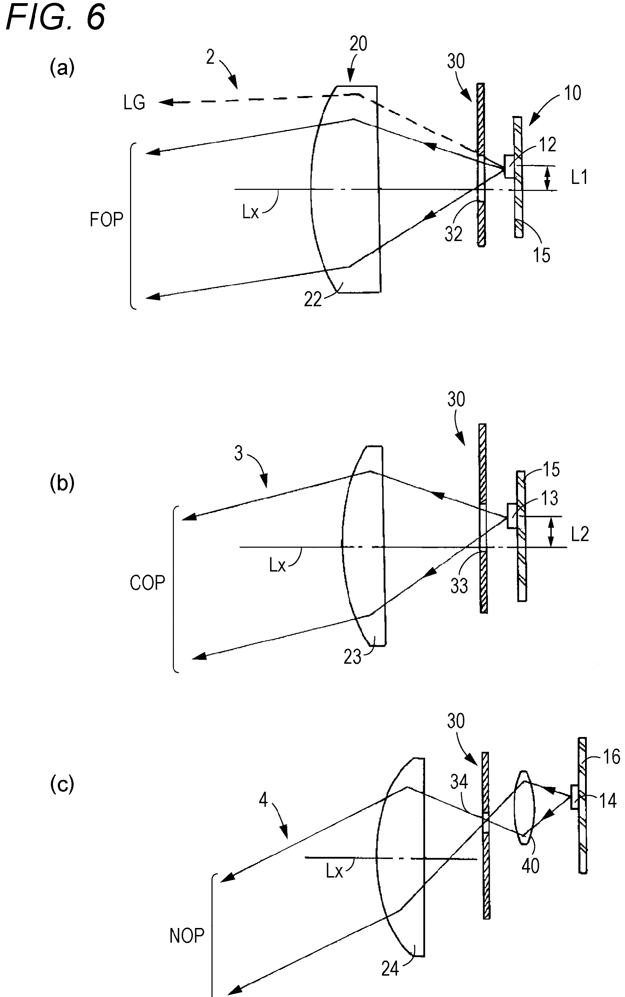

In the projection device 1 configured as described above, as shown in a schematic side view of Fig. 6(a), the far projection lens 22 is configured such that the far LED 12 is positioned on a focal plane on the light source side. That is, the far LED 12 is disposed at a position displaced upward by a required first dimension L1 from the optical axis Lx on the focal plane of the far projection lens 12.

On the other hand, the center projection lens 23 is configured as a lens having a focal length shorter than that of the far projection lens 22, and as schematically shown in Fig. 6(b), the center LED 13 is disposed at a position displaced upward by a second dimension L2, which is longer to some extent than the first dimension L1, from the optical axis Lx on the focal plane of the center projection lens 23.

The near projection lens 24 is configured as a lens having a focal length shorter than that of the center projection lens 23, and as schematically shown in Fig. 6(c), the near shade opening 34 is disposed at a position above the optical axis Lx on the focal plane. The primary lens 40 includes a lens having such a focal length that the amber light emitted from the near LED 14 is condensed to the near shade opening 34.

According to the projection device 1 of the embodiment having the above-described configuration, for example, when the traveling direction of the automobile CAR is changed and the auxiliary lamp SL is turned on (blinks) as the turn signal lamp, the projection device 1 projects the light pattern at the same time. That is, the LEDs 12,13, 14 of the projection units 2, 3, 4 emit light, and the projection lenses 22, 23, 24 project the light patterns FOP, COP, NOP shown in Fig. 2 using the light emitted from the LEDs 12,13, 14. Note that the shown optical path when the projection device 1 performs projection is simply shown for description, and does not accurately indicate an actual optical path.

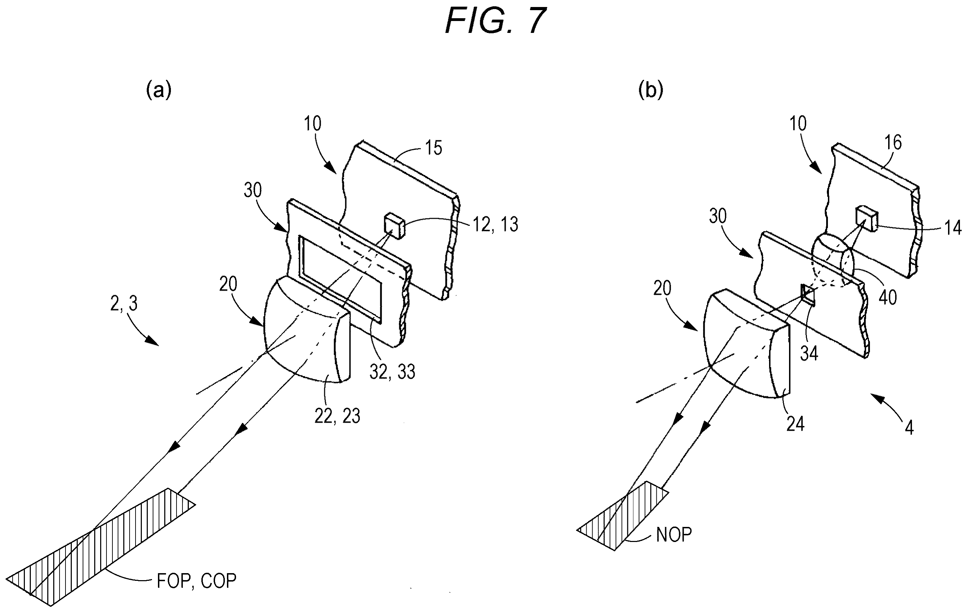

As shown in Figs. 5 and 6(a), in the far projection unit 2, the far LED 12 emits light, and the emitted amber light is transmitted through the far shade opening 32 and projected onto the road surface far in front of the automobile by the far projection lens 22. Fig. 7(a) is a schematic perspective view thereof. That is, the light emitted from the rectangular light emitting surface when the far LED 12 emits light is transmitted through the far shade opening 32, is then projected onto the road surface in front of the automobile by the far projection lens 22, and is projected onto the road surface as the rectangular far light pattern FOP equivalent to the shape of the light emitting surface of the far LED 12.

Since the light is projected obliquely onto the road surface, the projected far light pattern FOP is the light pattern elongated in the front-rear direction of the automobile CAR as shown in Fig. 2(a). Among the light emitted from the far LED 12, the non-pattern light not contributing to projection of the far light pattern FOP is blocked by the shade 30.

Similarly, as shown in Figs. 5 and 6(b), in the center projection unit 3, the light emitted from the rectangular light emitting surface when the center LED 13 emits light is transmitted through the center shade opening 33, is then projected onto the road surface in front of the automobile by the center projection lens 23, and is projected onto the road surface as the rectangular center light pattern COP equivalent to the shape of the light emitting surface of the center LED 13. As shown in Fig. 2(a), the center light pattern COP is the light pattern located closer to the automobile CAR than the far light pattern FOP and elongated in the front-rear direction. Among the light emitted from the center LED 13, the non-pattern light not contributing to projection of the center light pattern COP is blocked by the shade 30. This projection form is similar to the projection form of the far projection unit 2 shown in Fig. 7(a).

As shown in Figs. 5 and 6(c), in the near projection unit 4, the near LED 14 emits light, and the emitted amber light is condensed at the position near the near shade opening 34 by the primary lens 40. The light is transmitted through the near shade opening 34 to be a rectangular light beam, and is then projected as the near light pattern NOP onto the road surface in front of the automobile by the near projection lens 24. As in Fig. 2(a), the near light pattern NOP is the light pattern located closer to the automobile CAR than the center light pattern COP and elongated in the front-rear direction. Among the light emitted from the near LED, the non-pattern light not contributing to projection of the near light pattern NOP is blocked by the shade 30.

As described above, by projecting the light pattern OP in synchronization with lighting (blinking) of the turn signal lamp SL, it is possible to display the traveling direction of the automobile by light irradiation from the turn signal lamp SL and the light pattern OP from the projection device 1 and to enhance traffic safety. In particular, projection of the far light pattern FOP far in front of the automobile CAR can call attention to other vehicles and pedestrians present far ahead, and can enhance the safety.

At the time of projection of the light pattern, when non-pattern light not contributing to projection of the light pattern is emitted from the projection lenses 22, 23, 24 of the projection units 2, 3, 4 and is emitted to a region a required angle or more higher than the projection lenses 22, 23, 24, as indicated by dots in Fig. 2(b), the non-pattern light enters the irradiation light region of the auxiliary lamp SL, that is, the turn signal lamp, disposed at the upper position of the projection device 1, and turns into glare light LG.

In particular, in the projection device 1, the glare light is easily generated in the far projection unit 2 and the center projection unit 3, the projection light of which is directed relatively upward. For this reason, in the far projection unit 2 and the center projection unit 3, by appropriately setting the shapes and dimensions of the shade openings 32, 33, the light directed upward among the light emitted from the LEDs 12, 13 is blocked by the shade 30. In Fig. 6(a), the non-pattern light (thick broken line) LG directed upward in the far projection unit 2 is blocked by the shade 30. This reduces the non-pattern light from turning into the glare light LG. On the other hand, in the near projection unit 4, only the light for projecting the near light pattern NOP is transmitted through the shade opening 34, and the non-pattern light is blocked by the shade 30, so that little glare light is generated.

Each of the projection lenses 22, 23, 24 of the projection units 2, 3, 4 has such a shape that the four sides of the circular lens are cut off, and the area of the lens surface thereof, that is, the surface from which the light for projecting the light pattern is emitted, is reduced. As a result, the light having transmitted through the lens surfaces of the projection lenses 22, 23, 24 and directed to left, right, up, and down is reduced. In particular, by cutting off the upper side portion of the lens surface to reduce the dimension of the projection lens in the up-down direction, the light having transmitted through the upper side region of the lens surface and directed upward is reduced, and the glare light is reduced. In addition, by cutting off the lower side portion and the left and right side portions, the non-pattern light directed upward from these side regions can be reduced, and the glare light is reduced. Note that since the glare light is less likely to be generated in the downward direction and the left-right horizontal direction, the light is less likely to be blocked by the shade in these directions.

When each side portion including the upper side portions of the projection lenses 22, 23, 24 is cut off to reduce the area of the lens surface of the projection lens, the amount of light projected from each of the projection lenses 22, 23, 24 may be reduced, and the brightness of the projected light pattern may be reduced. In particular, in the far projection unit 2 and the center projection unit 3, in which the light pattern projection distance is relatively large, a decrease in brightness of each light pattern is noticeable.

In the embodiment, in the far projection unit 2 and the center projection unit 3, a projection method is used, in which the light emitted from the LEDs 12,13 is incident on the projection lenses 22, 23 as it is, that is, directly, and the light pattern is projected based on the surface shapes of the light emitting surfaces of the LEDs 12,13. That is, a direct projection method of projecting the rectangular shape of the light emitting surfaces of the LEDs 12,13 as the light pattern is used. Thus, as compared with an indirect projection method in which the light pattern corresponding to the shape of the shade opening 34 is projected by the pseudo light source of the LED formed using the light from the LED 14 by the primary lens 40 as in the near projection unit 4, it is possible to suppress a decrease in brightness of the light pattern due to light absorption, irregular reflection, or the like when transmitted through the primary lens 40 and to prevent a decrease in brightness due to a decrease in lens surface area.

Note that the direct projection method used by the far projection unit 2 and the center projection unit 3 tends to have a lower sharpness at an edge portion of the projected light pattern than that in the indirect projection method of the near projection unit 4. However, since the projection distances of the far light pattern FOP and the center light pattern COP are long, the sharpness of the light pattern is originally lower than that of the near light pattern NOP (see Fig. 7(b)), and therefore, a decrease in sharpness of the light pattern is not noticeable even when the direct projection method is used. In the near projection unit 4, since the projection distance of the light pattern is short and the sharpness is easily noticeable, it is possible to project the light pattern with a high sharpness by adopting the indirect projection method using the primary lens 40 and the shade opening 34.

As described above, in the projection device 1 of the embodiment, in the far projection unit 2 and the center projection unit 3, the non-pattern light is blocked by the shade 30 incorporated into the housing 100, and emission of the non-pattern light from the projection lenses 22, 23 is reduced, so that the glare light can be effectively prevented. On the other hand, by adopting the direct projection method, a decrease in brightness of the light pattern can be prevented. On the other hand, in the near projection unit 4, the glare light and a decrease in brightness of the light pattern are not so problematic, so that the pattern quality of the light pattern can be enhanced by adopting the indirect projection method.

In the present invention, the light source 10, shade 30, and projection lens 20 of the projection units 2, 3, 4 may be provided as separate components. In a case where the projection lens 20 is provided separately, the glare light is reduced by reducing the area of the lens surface of the projection lens particularly in the projection unit adopting the direct projection method.

The projection device 1 may be disposed on the side of the front lamp FL. In this case, when the area of the lens surface of the projection lens is reduced, the dimension in the left-right direction may be particularly reduced. For example, one side portion of the projection lens on the side where the front lamp is present may be cut off. The shade may be configured to block the non-pattern light in the left-right direction.

Here, for example, in a case where a decrease in brightness of the light pattern is not so problematic even if the area of the lens surface is reduced in the center projection unit 3, the center projection unit 3 may be configured as a projection unit adopting the indirect projection method, similarly to the near projection unit 4. That is, a unit configuration is adopted, in which a shade opening having a shape corresponding to a light pattern is provided in a shade and a primary lens that condenses light from a light source to the shade opening is used. In the near projection unit 4, the primary lens may include a reflector as long as the primary lens has a function of condensing light to form the pseudo light source.

In the embodiment described above, the example has been described, in which the light patterns are projected onto the three different positions as the far light pattern, the center light pattern, and the near light pattern. However, the present invention can be applied to a projection device that projects light patterns onto at least two positions relatively on the near distance side and the far distance side. That is, the far distance side projection unit that projects the light pattern on the far distance side is configured as a projection unit adopting the direct projection method, and the near distance side projection unit that projects the light pattern on the near distance side is configured as a projection unit adopting the indirect projection method.

The present invention is not limited to the projection device for projecting the light pattern onto the road surface in front of the vehicle as described in the embodiment, and the present invention is also applied to a projection device for projecting the light pattern toward the rear or side of the vehicle. The present invention can also be applied to a case where the projection device is disposed on the side of the lamp.

The present international application claims priority based on Japanese Patent Application No. 2023-110375 filed on July 5, 2023, and the entire contents of Japanese Patent Application No. 2023-110375 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

1 Projection device
2 Far projection unit (far distance side projection unit)
3 Center projection unit (far distance side projection unit)
4 Near projection unit (near distance side projection unit)
10(12, 13, 14) Light source (light emitting element: LED)
15, 16 Light source substrate
20(22, 23, 24) Projection lens
30 Shade
32, 33, 34 Shade opening
40 Primary lens
100 Housing
CAR Automobile (vehicle)
OP Light pattern
FOP Far light pattern (far distance side light pattern)
COP Center light pattern (far distance side light pattern)
NOP Near light pattern (near distance side light pattern)
SL Auxiliary lamp (turn signal lamp)
LG Glare light

## Claims

1. A projection device mounted on a vehicle to project a light pattern onto a surrounding road surface, comprising: a far distance side projection unit that projects a predetermined far distance side light pattern onto a relatively far position; and a near distance side projection unit that projects a predetermined near distance side light pattern onto a relatively near position, wherein the far distance side projection unit is a projection unit that projects, as a light pattern, a surface shape of a light emitting surface of a light source, and the near distance side projection unit is a projection unit that projects, as a light pattern, an opening shape of a shade opening opened in a shade that blocks light emitted from a light source.

2. The projection device according to claim 1, wherein the far distance side projection unit includes a light source having a light emitting surface in a required shape, and a projection lens that projects light emitted from the light emitting surface, the light emitting surface is disposed on a focal plane of the projection lens, and the projection lens projects, as a light pattern, a surface shape of the light emitting surface.

3. The projection device according to claim 2, wherein the far distance side projection unit includes a shade that blocks non-pattern light not contributing to a light pattern to be projected.

4. The projection device according to claim 1, wherein the near distance side projection unit includes a light source that emits light, a primary lens that condenses the light from the light source, a shade having a shade opening through which the light condensed by the primary lens is transmitted, and a projection lens that projects the light having transmitted through the shade opening, and the projection lens projects, as a light pattern, an opening shape of the shade opening.

5. The projection device according to any one of claims 1 to 4, wherein the projection device is disposed at a position below a lamp mounted on the vehicle to emit predetermined light, and projects a light pattern in synchronization with light irradiation of the lamp.

6. The projection device according to claim 5, wherein the lamp is an auxiliary lamp including a turn signal lamp of the vehicle.

7. The projection device according to claim 5, wherein an upper side portion of a circular lens surface of the projection lens is cut off.

8. The projection device according to claim 1, wherein the far distance side projection unit includes a far projection unit that projects a far light pattern onto a position farthest from the vehicle, and a center projection unit that projects a center light pattern closer to the vehicle than the far light pattern, and the near distance side projection unit is configured as a near projection unit that projects a near light pattern closer to the vehicle than the center light pattern.

9. The projection device according to claim 8, wherein each of the far distance side projection unit and the near distance side projection unit is configured such that a projection lens and a shade are integrally formed.
